# EUROPEAN PATENT SPECIFICATION

(11) **EP 2 931 605 B1**
(45) Date of publication and mention of the grant of the patent: **11.01.2017**
(21) Application number: 14707005.6
(22) Date of filing: 03.02.2014
(51) Int. Cl.: B64D 13/06, F24F 7/10, B64D 13/00, B64D 11/06

(54) **AIRCRAFT CIRCULATION SYSTEM FOR PASSENGER CABINS**
FLUGZEUG-ZIRKULATIONSSYSTEM FÜR PASSAGIERKABINEN
SYSTEME DE CIRCULATION DE AVION POUR CABINES DE PASSAGERS

(30) Priority: 04.03.2013 US 201313783664
(43) Date of publication of application: 21.10.2015
(60) Divisional application: 16194056.4
(73) Proprietor: The Boeing Company, Chicago, IL 60606-1596 (US)
(72) Inventor: KELEHER, Andrew P., Seattle, Washington 98124-2207 (US); EISELE, Gregory T., Everett, Washington 98204-1910 (US)
(74) Representative: Cabinet Plasseraud
(86) International application number: PCT/US2014/014386
(87) International publication number: WO 2014/137515

(56) References cited:
- EP-A2- 0 239 548
- WO-A2-2005/052459
- GB-A- 489 423
- GB-A- 1 204 594

## Description

### BACKGROUND INFORMATION

### Field:

The present disclosure relates generally to aircraft and, in particular, to environmental systems in aircraft. Double particular, the present disclosure relates to a method and apparatus for circulating air in a passenger cabin of an aircraft.

### Background:

The environmental control system of an aircraft controls the air supply, temperature, and pressure in the aircraft. In managing the air supply, areas such as the passenger cabin are designed to circulate air within the passenger cabin. With respect to circulating air, vents, grills, ducts, fans and other devices are located within and around the passenger cabin. The passenger cabin is typically open and air circulates freely within the passenger cabin without obstructions. In some aircraft, suites are provided within the cabin. Suites may be found in first-class passenger cabins. These suites are private sitting areas. A suite may provide a private seating area for one or more persons. This private sitting area may be formed by installing walls in a passenger cabin. These walls may cover three or more sides to provide a desired level of privacy and passenger comfort.

A suite typically has two doors that move to open and close. The presence of suites in the passenger cabin, however, may reduce the flow of air that circulates within the passenger cabin. The height of the walls and the suite doors affect the flow of air in the entire passenger cabin. As a result, air stagnation and temperature stratification may occur within the suite, in the aisles outside of the suite, and in other areas of the passenger cabin.

Currently, a suite may have louvers on the doors to provide for ventilation of air. Additionally, the suite also may include one or more gasper air outlets. These currently used mechanisms, however, often do not provide a desired circulation within the passenger cabin. Therefore, it would be desirable to have a method and apparatus that takes into account at least some of the issues discussed above, as well as other possible issues.

Document WO 2005/052459 discloses an air conditioning system for a compartment of a vehicle such as an aircraft, which compartment may include separate sub-compartments and is provided with an air inlet unit for introducing fresh air from the outside of the vehicle through an inlet wall of the compartment and with an air outlet unit at an opposite outlet wall of the compartment for discharging the exhaust air outside the vehicle. Each sub-compartment comprises above the ceiling of the compartment a local air treatment unit with a return air intake unit and a conditioned air outlet, where the flowing air is mixed with the recirculated air without using inlet or outlet air ducts, so that the air conditioning of the compartment is locally adjusted.

### SUMMARY

An air circulation system of the invention for a passenger cabin comprises a suite and a circulation unit, the suite forming a private sitting area within the passenger cabin and having walls extending upward from a floor of the passenger cabin without reaching a ceiling of the passenger cabin. According to the invention, the circulation unit comprises:
- an inlet system configured to receive air in the passenger cabin in a location outside of the suite;
- an outlet system configured to output the air received by the inlet system into an interior of the suite; and
- a fan system configured to cause a movement of the air into the inlet system from outside of the suite and out of the outlet system into the interior of the suite,
   so that the air moves upwards in the suite and over the walls, the air moving over the walls causing a desired level of circulation of the air within the passenger cabin.

In another illustrative embodiment, an apparatus comprises an inlet system, an outlet system, and a fan system. The inlet system is configured to receive air in a passenger cabin in a location outside of a suite. The outlet system is configured to output the air received by the inlet system into an interior of the suite. The fan system is configured to cause a movement of the air into the inlet system and out of the outlet system. The movement of the air causes a desired circulation of the air in the passenger cabin.

The invention also provides a method for circulating air in a passenger cabin comprising a suite having walls forming a private sitting area, characterized in that the method comprises:
moving the air in the passenger cabin, from an exterior of the suite into an inlet system connected to one of the walls thereof; and
moving the air received by the inlet system into an interior of the suite through an outlet system connected to said one wall,
so that the air moved in the suite mixes with the air outside the suite in the passenger cabin, which causes a desired level of circulation of the air in the passenger cabin.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of an air circulation environment in accordance with an illustrative embodiment;
**Figure 3** is an illustration of an inlet system in accordance with an illustrative embodiment;
**Figure 4** is an illustration of an outlet system in accordance with an illustrative embodiment;
**Figure 5** is an illustration of a fan system in accordance with an illustrative embodiment;
**Figure 6** is an illustration of an exterior view of a suite in accordance with an illustrative embodiment;
**Figure 7** is another illustration of an exterior view of a suite in accordance with an illustrative embodiment;
**Figure 8** is an illustration of an interior view of a suite in accordance with an illustrative embodiment;
**Figure 9** is another illustration of an interior view of a suite in accordance with an illustrative embodiment;
**Figure 10** is an illustration of a circulation unit in accordance with an illustrative embodiment;
**Figure 11** is another illustration of a circulation unit in accordance with an illustrative embodiment;
**Figure 12** is a cross-sectional view of a suite within an aircraft in accordance with an illustrative embodiment;
**Figure 13** is an illustration of flowchart of a process for circulating air in a passenger cabin in accordance with an illustrative embodiment;
**Figure 14** is an illustration of an aircraft manufacturing and service method in accordance with an illustrative embodiment; and
**Figure 15** is an illustration of an aircraft in which an illustrative embodiment may be implemented.

### DETAILED DESCRIPTION

The illustrative embodiments recognize and take into account one or more different considerations. Illustrative embodiments recognize and take into account that the louvers in the doors of a suite do not provide for active movement of air. Any airflow through the louvers is passive and may not provide a desired level of circulation of air in the passenger cabin. Additionally, the illustrative embodiments also recognize and take into account that the gasper air outlets are designed for providing airflow to the face of a passenger or some other portion of the passenger. These gasper air outlets are not designed to facilitate airflow within the passenger cabin in a manner that provides desired circulation of air.

Thus, the illustrative embodiments provide a method and apparatus for circulating air in a passenger cabin. In one illustrative embodiment, an apparatus comprises an input system, an outlet system, and a fan system. The inlet system is configured to receive air in a passenger cabin of an aircraft in a location outside of a suite. The outlet system is configured to output air received by the inlet system into the interior of the suite. The fan system is configured to cause the movement of the air into the inlet system and out of the outlet system. The movement of the air causes a desired circulation of air within the passenger cabin.

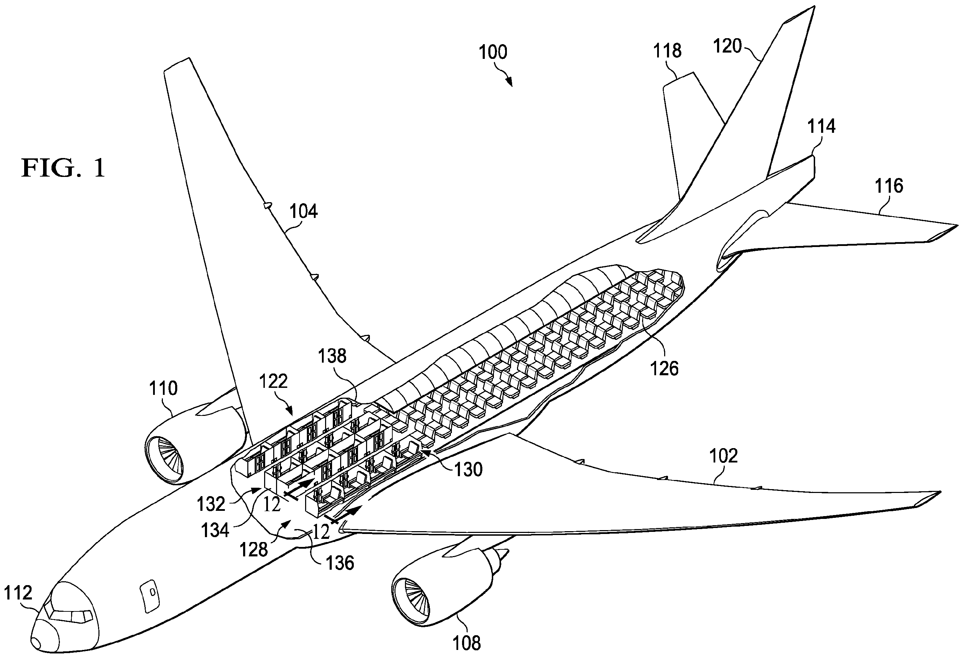

With reference now to the figures, and in particular, with reference to **Figure 1****,** an illustration of an aircraft is depicted in accordance with an illustrative embodiment. In this illustrative example, aircraft **100** has wing **102** and wing **104** attached to body **106.** Aircraft **100** includes engine **108** attached to wing **102** and engine **110** attached to wing **104.**

Body **106** has nose section **112** and tail section **114.** Horizontal stabilizer **116,** horizontal stabilizer **118,** and vertical stabilizer **120** are attached to tail section **114** of body **106.**

In this illustrative example, passenger cabin **122,** passenger cabin **124** and passenger cabin **126** are shown in an exposed view of aircraft **100.** As depicted, passenger cabin **122** is a first-class passenger cabin and includes suites **128** in addition to seats **130.**

In this illustrative example, suites **128** are private sitting areas located in passenger cabin **122.** These private sitting areas may seat one or more passengers.

For example, suite **132** includes a seat (not shown) surrounded by walls **134.** Walls **134** extend upward from floor **136** of passenger cabin **122** without reaching ceiling **138** in passenger cabin **122.**

In the illustrative examples, an air circulation system may be implemented within passenger cabin **122.** The air circulation system may provide a desired circulation of air within passenger cabin **122** containing suites **128.**

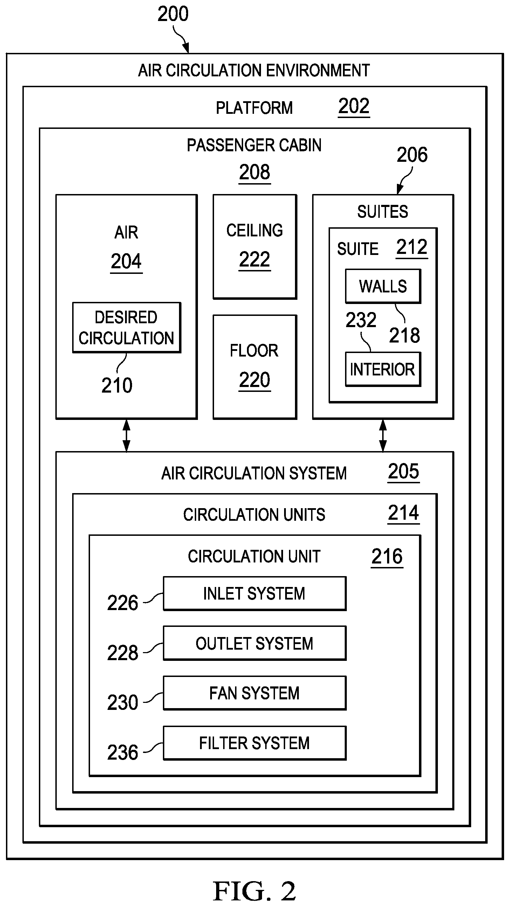

Turning next to **Figure 2****,** an illustration of a block diagram of an air circulation environment is depicted in accordance with an illustrative embodiment. As depicted, air circulation environment **200** includes platform **202** in which air **204** may circulate. In this illustrative example, air **204** may circulate within passenger cabin **208** in platform **202.** In this illustrative example, platform **202** may take the form of aircraft **100** illustrated in **Figure 1****.**

In the illustrative examples, the circulation of air **204** may be facilitated by air circulation system **205.** In this illustrative example, air circulation system **205** may be associated with suites **206** in passenger cabin **208.** With air circulation system **205,** desired circulation **210** of air **204** may occur within passenger cabin **208.** Desired circulation **210** may be a circulation of air **204** such that passenger cabin **208** may reduce or avoid stagnant air, temperature stratification, or other undesirable conditions within suite **212,** other suites in suites **206,** or other areas within passenger cabin **208** that may result in an undesired experience for passengers.

In one illustrative example, air circulation system **205** may be implemented in suite **212** within suites **206.** In particular, air circulation system **205** may comprise circulation units **214.** For example, circulation unit **216** in circulation units **214** may be associated with suite **212.**

When one component is "associated" with another component, the association is a physical association in the depicted examples. For example, a first component may be considered to be associated with a second component by being secured to the second component, bonded to the second component, mounted to the second component, welded to the second component, fastened to the second component, and/or connected to the second component in some other suitable manner. The first component also may be connected to the second component using a third component. The first component may also be considered to be associated with the second component by being formed as part of and/or an extension of the second component.

As depicted, suite **212** has walls **218** extending upward from floor **220** of passenger cabin **208** without reaching ceiling **222** of passenger cabin **208.** In other words, an open area is present between top of walls **218** and ceiling **222** in these illustrative examples.

In the illustrative example, air circulation system **205** includes a number of different components. For example, air circulation system **205** includes inlet system **226,** outlet system **228,** and fan system **230.**

Inlet system **226** is configured to receive air **204** in passenger cabin **208** in a location outside of suite **212.** A part of inlet system **226** is in the location outside of **suite 212** to receive air **204** in the location outside of suite **212.** Outlet system **228** is configured to output air **204** received by inlet system **226** into interior **232** of suite **212.** Fan system **230** is configured to cause a movement of air **204** into inlet system **226** from outside of suite **212.** Fan system **230** is further configured to move air **204** received through inlet system **226** out of outlet system **228** into interior **232** of suite **212.**

As another illustrative example, circulation unit **216** also may include other components in addition to or in place of the ones illustrated. For example, circulation unit **216** also may include filter system **236.**

Filter system **236** may be implemented using a number of different components. For example, filter system **236** may include an air filter configured to remove particles such as dust, pollen, mold, and bacteria from the air. In some illustrative examples, the air filter may also be a chemical air filter that includes a catalyst to remove various volatile organic compounds or ozone. In still other illustrative examples, filter system **236** also may include an ultraviolet light unit configured to render bacteria and other undesired particles inert.

In these illustrative examples, the movement of air **204** by circulation unit **216** may cause air **204** in interior **232** of suite **212** to move upward in suite **212.** This movement of air **204** in suite **212** may be upward and over walls **218.** This movement of air **204** may cause air **204** in suite **212** to mix with air **204** outside of suite **212** in passenger cabin **208.** In this manner, desired circulation **210** of air **204** may occur within passenger cabin **208.**

Thus, with the use of air circulation system **205** and, in particular, circulation units **214,** desired circulation **210** may occur within passenger cabin **208.** Desired circulation **210** may occur even with the presence of suites **206** blocking portions of passenger cabin **208.**

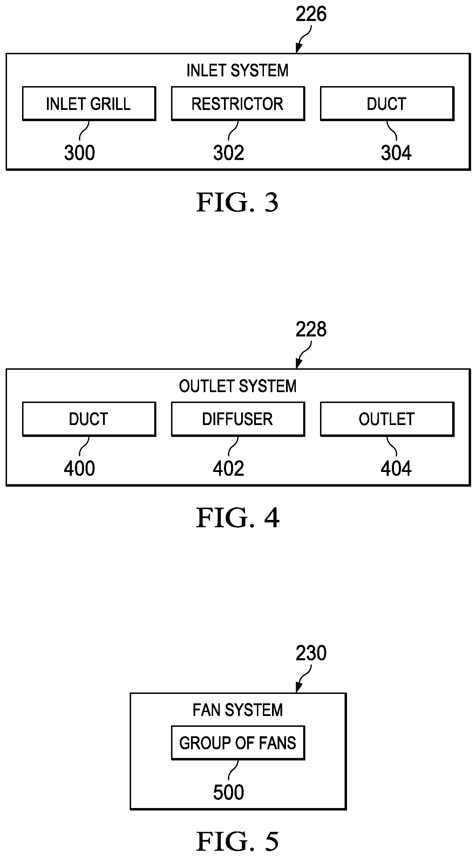

Turning next to **Figure 3****,** an illustration of an inlet system is depicted in accordance with an illustrative embodiment. An illustration of components that may be used to implement inlet system **226** in **Figure 2** is shown in this figure. As depicted, inlet system **226** includes a number of different components. In one illustrative example, inlet system **226** includes inlet grill **300,** restrictor **302,** and duct **304.**

Inlet grill **300** is located on a wall in walls **218** outside of suite **212.** Inlet grill **300** provides an opening to receive air **204** in **Figure 2****.** In these illustrative examples, the area of inlet grill **300** is shaped such that movement of air **204** into inlet grill **300** from the main passenger aisle of platform **202** is substantially imperceptible to a person near inlet grill **300.** In other words, inlet grill **300** is shaped such that a draft is not felt by persons in the main passenger aisle of platform **202.** As depicted, restrictor **302** is connected to inlet grill **300.** In these illustrative examples, restrictor **302** is configured to connect inlet grill **300** to duct **304.**

Duct **304** is a channel that provides a connection from restrictor **302** to fan system **230** in **Figure 2****.** In these depicted examples, duct **304** is smaller than inlet grill **300** in platform **202.** As a result, an increase in velocity of air **204** as it passes through restrictor **302** into duct **304** occurs. The smaller size may be result of space restrictions in platform **202.**

Turning next to **Figure 4****,** an illustration of an outlet system is depicted in accordance with an illustrative embodiment. An illustration of components that may be used to implement outlet system **228** in **Figure 2** is shown in this figure. As depicted, outlet system **228** includes a number of different components. For example, outlet system **228** includes duct **400,** diffuser **402,** and outlet **404.** Duct **400** is configured to be connected to fan system **230** in **Figure 2****.** Duct **400** is also connected to diffuser **402** in this illustrative example.

Diffuser **402** is configured to reduce the velocity of air **204** received through duct **400** from fan system **230** in **Figure 2****.** Outlet **404** is an opening that is located inside suite **212.** Outlet **404** may take various forms. For example, outlet **404** may take the form of a grill, nozzle, or some other suitable type of opening.

In these illustrative examples, diffuser **402** is configured to reduce the velocity of air **204** entering suite **212** as air **204** is output from outlet **404.** This reduction in the velocity of air **204** may be such that the movement of air **204** in suite **212** is substantially imperceptible to a person in suite **212.** In the illustrative examples, the velocity of air **204** in suite **212** may be selected to avoid a feeling of draftiness by a passenger in suite **212.** For example, the velocities may be selected to avoid a feeling of draftiness on ankles, wrists, head, or other body parts of a passenger.

Turning next to **Figure 5****,** an illustration of a fan system is depicted in accordance with an illustrative embodiment. An illustration of components that may be used to implement fan system **230** in **Figure 2** are shown in this figure.

In this illustrative example, fan system **230** is comprised of a group of fans **500.** As used herein, " a group of", when used with reference items, means one or more items. For example, group of fans **500** is one or more fans.

As depicted in these illustrative examples, a fan in group of fans **500** may be a fan that has a brushless motor. Further, the fan may be selected to avoid generating undesired noise, fumes, smoke, or other undesired conditions when the fan does not operate as desired.

In these illustrative examples, group of fans **500** are comprised of the same type of fans or different fans when more than one fan is present in group of fans. Of course, different types of fans also may be used.

The illustration of air circulation environment **200** in the different components for air circulation system **205** in **Figures 2-5** are not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although platform **202** has been described as taking the form of aircraft **100** in **Figure 1****,** platform **202** may take other forms. For example, platform **202** also may be selected from one of a surface ship, a cruise ship, a spacecraft, a train, or some other suitable type of platform.

In still other illustrative examples, one or more circulation units may be associated with suite **212** in addition to circulation unit **216.** For example, suite **212** may include two circulation units, four circulation units, or some other number of circulation units. The number of circulation units used may depend on the airflow needed for desired circulation **210** within passenger cabin **208.**

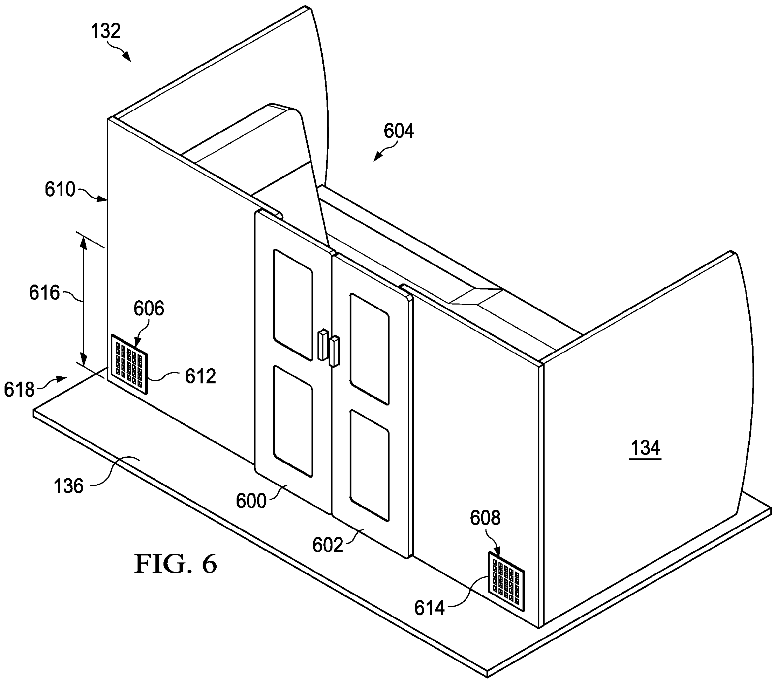

With reference now to **Figures 6-9****,** illustrations of a suite are depicted in accordance with an illustrative embodiment. In these illustrative examples, a more detailed illustration of suite **132** in passenger cabin **122** in **Figure 1** with two circulation units is shown.

Turning next to **Figure 6****,** an illustration of an exterior view of a suite is depicted in accordance with an illustrative embodiment. A more detailed illustration of suite **132** is shown in this view. As depicted, suite **132** also includes door **600** and door **602** to provide entry and exit from interior **604** of suite **132.**

Additionally, suite **132** also has circulation unit **606** and circulation unit **608.** A portion of the circulation units can be seen on exterior **610** of walls **134** in this view. More specifically, inlet grill **612** in circulation unit **606** and inlet grill **614** in circulation unit **608** can be seen. As depicted, inlet grill **612** and inlet grill **614** are located on lower half **616** of exterior **610** of walls **134.** In these illustrative examples, inlet grill **614** may be located on a wall in walls **134** that is adjacent to aisle **618** in passenger cabin **122.**

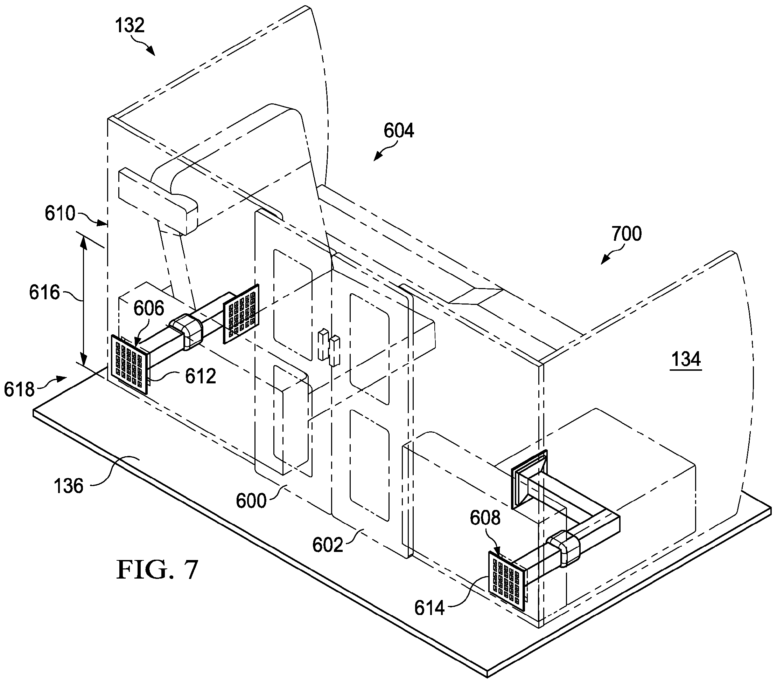

With reference now to **Figure 7****,** another illustration of an exterior view of a suite is depicted in accordance with an illustrative embodiment. In this depicted example, a transparent view of suite **132** is depicted. In this view of suite **132,** monuments **700** within interior **604** of walls **134** of suite **132** can be seen. In particular, circulation unit **606** and circulation unit **608** are configured to be located within monuments **700.** A monument is a structure. A monument may be attached to floor **136.** A monument may be, for example, a seat, cabinetry, a galley, a credenza, or other structures that may be present in a platform such as an aircraft.

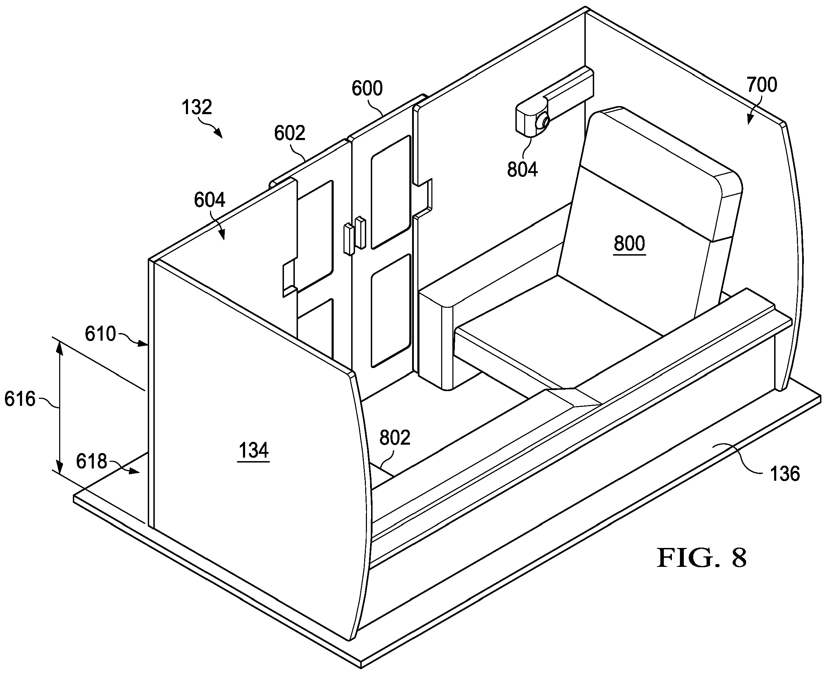

Turning next to **Figure 8****,** an illustration of an interior view of a suite is depicted in accordance with an illustrative embodiment. In this example, a view of interior **604** of suite **132** is shown. In this view, monuments **700** include seat **800** and bench **802.**

Also seen in this view is gasper unit **804.** Gasper unit **804** is configured to provide airflow to a passenger. In these illustrative examples, gasper unit **804** is not configured to aid in circulation of air within the passenger cabin.

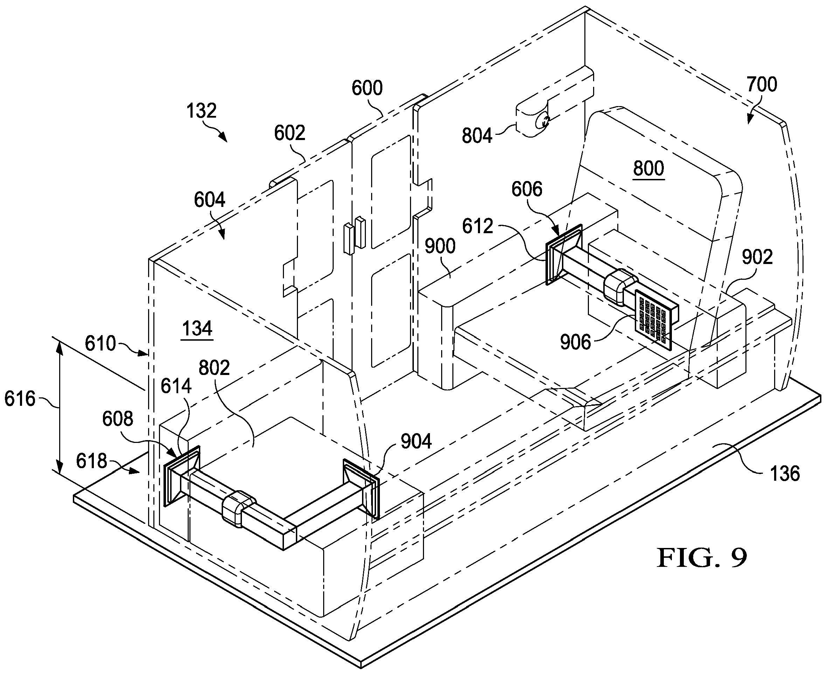

With reference now to **Figure 9****,** another illustration of an interior view of a suite is depicted in accordance with an illustrative embodiment. A transparent view of interior **604** of suite **132** is shown in this view. Circulation unit **606** and circulation unit **608** can be seen located within monuments **700.** As depicted in this view, circulation unit **608** is located within bench **802.** Circulation unit **606** extends through armrest **900** in seat **800** and light unit **902** located behind seat **800.** The location of circulation unit **608** within bench **802** reduces the visibility of circulation unit **608** to a passenger in suite **132.** Further, the placement of circulation unit **606** extending through armrest **900** and light unit **902** is an example of an inconspicuous location in suite **132.** In this manner, the aesthetics of suite **132** may be increased without a passenger seeing different components of circulation unit **606** and circulation unit **608.**

As can be seen in this transparent view, outlet **904** in circulation unit **608** is located on bench **802.** Outlet **906** in circulation unit **606** is located on light unit **902.** Outlet **906** is located on lower half **616** of walls **134** within interior **604** of suite **132.**

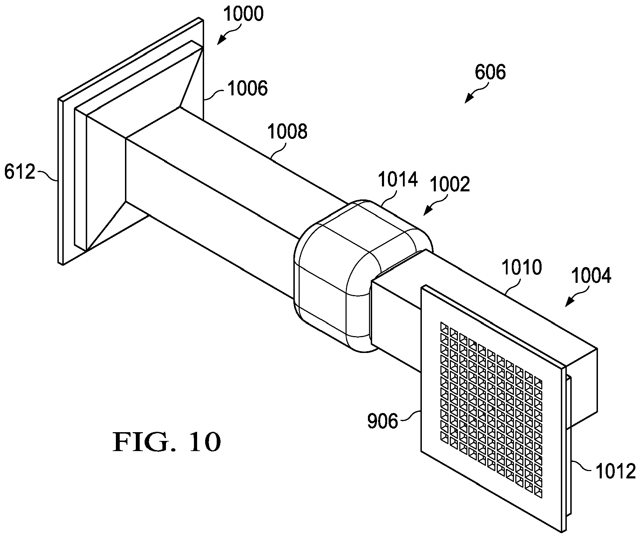

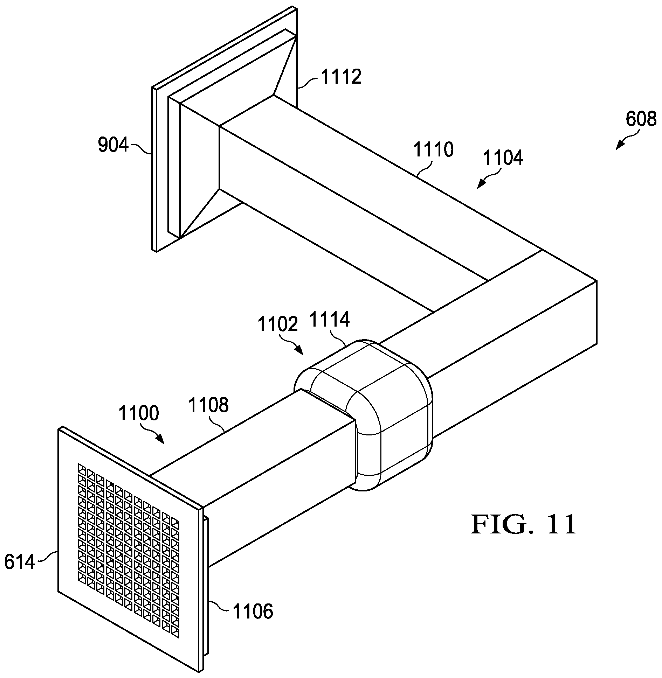

**Figure 10** and **Figure 11** are illustrations of circulation units that may be implemented in a suite in accordance with an illustrative embodiment. In **Figure 10****,** an illustration of a circulation unit is depicted in accordance with an illustrative embodiment. In this depicted example, an isometric view of circulation unit **606** is shown. Circulation unit **606** has inlet system **1000,** fan system **1002,** and outlet system **1004.** Inlet system **1000** includes inlet grill **612,** restrictor **1006,** and duct **1008.** Outlet system **1004** comprises duct **1010,** diffuser **1012,** and outlet **906.**

As depicted, fan system **1002** comprises fan **1014.** Fan **1014** is connected to duct **1008** in inlet system **1000** and duct **1010** in outlet system **1004** in this illustrative example. Turning next to **Figure 11****,** another illustration of a circulation unit is depicted in accordance with an illustrative embodiment. An isometric view of circulation unit **608** is shown in this figure.

Circulation unit **608** is comprised of inlet system **1100,** fan system **1102,** and outlet system **1104.** Inlet system **1100** includes inlet grill **614,** restrictor **1106,** and duct **1108.** In this illustrative example, outlet system **1104** includes duct **1110,** diffuser **1112,** and outlet **904.** Fan system **1102** is comprised of fan **1114.** Fan **1114** is connected to duct **1108** in inlet system **1100** and duct **1110** in outlet system **1104.**

With the location of circulation unit **606** and circulation unit **608** in lower half **616** of suite **132,** cooler air may be drawn into suite **132** as compared to placing these units in higher locations. Further, suites typically include multiple heat sources such as a video monitor, electronic boxes, seat actuators, armrest motors, in-flight entertainment systems (IFEs), and other devices that may generate heat. The cool air may be used to displace hot-air that rises in the suites in these illustrative examples.

Illustrations of suite **132,** circulation unit **606** and circulation unit **608** are not meant to imply limitations to the manner in which other illustrative embodiments may be implemented. For example, although two circulation units are illustrated, other numbers of circulation units may be used. In one illustrative example, only a single circulation unit may be used. In other examples, three or more circulation units may be associated with suite **132.**

As another illustrative example, the length and shape of the ducts also may vary. Although the ducts are shown having a square cross-section, other ducts may have other shapes. For example, the cross-section may be rectangular, circular, oval, or some other suitable shape.

In still other illustrative examples, a circulation unit may have more than one inlet or more than one outlet depending on the particular implementation. For example, two inlets may have ducts that connect to a fan. As another illustrative example, a filter system also may be included in one or more of the circulation units. The filter system may be included to remove particles or render biological particles in the air inert. The filter system may include, for example, an air filter, and ultraviolet light, and other suitable types of filter systems.

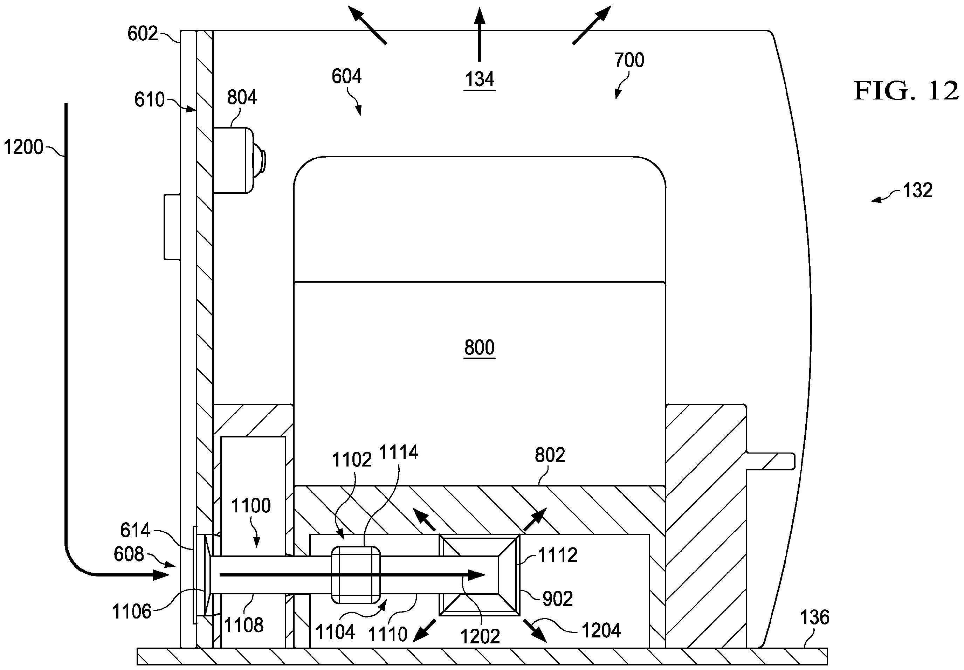

Turning now to **Figure 12****,** a cross-sectional view of a suite within an aircraft is depicted in accordance with an illustrative embodiment. In this depicted example, a cross-sectional view of suite **132 is** taken along lines **12-12** in **Figure 1****.**

In this cross-sectional view, air may flow in the direction of arrow **1200** through inlet grill **614** into circulation unit **608.** This airflow may pass through restrictor **1106** and duct **1108** to reach fan **1114.**

As can be seen in this particular example, the air may then flow through duct **1110** to diffuser **1112** as depicted by arrow **1202.** The air then flows out of outlet **908** into interior **604** of suite **132** as shown by arrows **1204.** The air may then flow upward over the tops of walls **134** to mix with cabin air outside of suite **132** in passenger cabin **122.**

The different components shown in **Figures 1** and **6****-12** may be combined with components in **Figures 2-5****,** used with components in **Figures 2-5****,** or a combination of the two. Additionally, some of the components in **Figures 1** and **6****-12** may be illustrative examples of how components shown in block form in **Figures 2-5** can be implemented as physical structures.

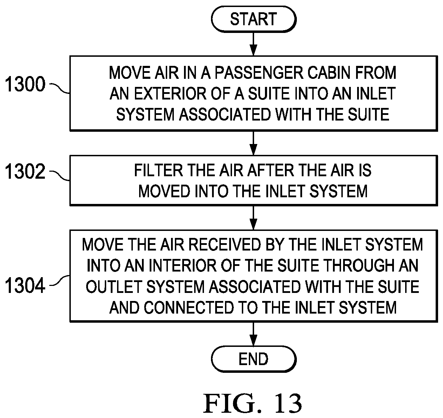

Turning next to **Figure 13****,** an illustration of a flowchart of a process for circulating air in a passenger cabin is depicted in accordance with an illustrative embodiment. The process illustrated in **Figure 13** may be implemented in air circulation environment **200** in **Figure 2****.** For example, one or more of the different operations in this flowchart may be implemented using one or more circulation units **214** in air circulation system **205.**

The process begins by moving air in a passenger cabin from an exterior of a suite into an inlet system associated with the suite (operation **1300**). The air is filtered after the air is moved into the inlet system (operation **1302**). The air received by the inlet system is moved into an interior of the suite through an outlet system associated with the suite and connected to the inlet system (operation **1304**) with the process terminating thereafter. In this illustrative example, the inlet system is indirectly connected to the outlet system by a fan system.

The different operations may cause a desired circulation of air within the passenger cabin. This process may be performed for one or more suites located in the passenger cabin. The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. For example, the filtering in operation **1302** may be amended in some steps.

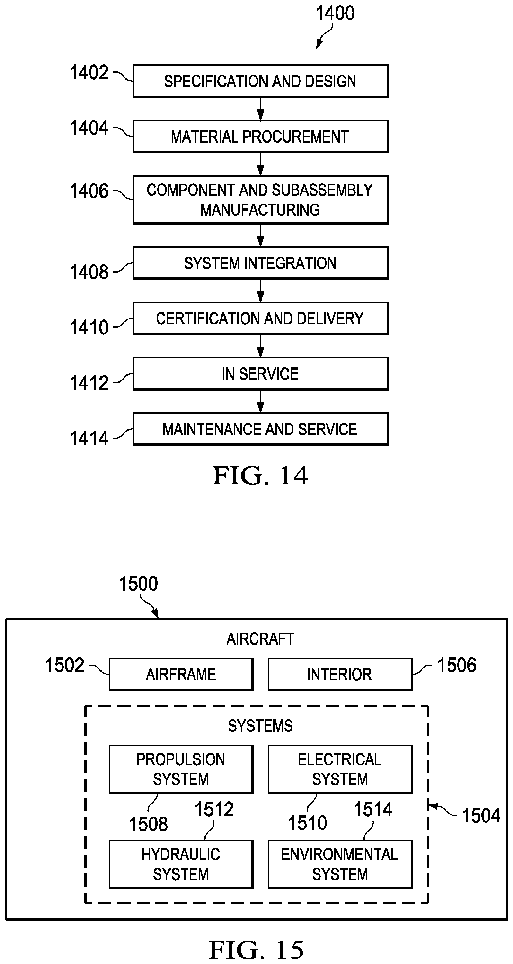

Illustrative embodiments of the disclosure may be described in the context of aircraft manufacturing and service method **1400** as shown in **Figure 14** and aircraft **1500** as shown in **Figure 15****.** Turning first to **Figure 14****,** an illustration of an aircraft manufacturing and service method is depicted in accordance with an illustrative embodiment. During pre-production, aircraft manufacturing and service method **1400** may include specification and design **1402** of aircraft **1500** in **Figure 15** and material procurement **1404.**

During production, component and subassembly manufacturing **1406** and system integration **1408** of aircraft **1500** in **Figure 15** takes place. Thereafter, aircraft **1500** in **Figure 15** may go through certification and delivery **1410** in order to be placed in service **1412.** While in service **1412** by a customer, aircraft **1500** in **Figure 15** is scheduled for routine maintenance and service **1414,** which may include modification, reconfiguration, refurbishment, and other maintenance or service.

Each of the processes of aircraft manufacturing and service method **1400** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 15****,** an illustration of an aircraft is depicted in which an illustrative embodiment may be implemented. In this example, aircraft **1500** is produced by aircraft manufacturing and service method **1400** in **Figure 14** and may include airframe **1502** with systems **1504** and interior **1506.** Examples of systems **1504** include one or more of propulsion system **1508,** electrical system **1510,** hydraulic system **1512,** and environmental system **1514.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1400** in **Figure 14****.** One or more illustrative embodiments may be implemented using system integration **1408** to install circulation units for a circulation system in suites in a passenger cabin in aircraft **1500.** Additionally, one or more illustrative embodiments may operate during in-service **1412** to provide desired air circulation within aircraft **1500.** Further, one or more illustrative embodiments may be implemented during maintenance and service **1414.** For example, circulation units may be added to suites in an aircraft. Circulation units may be installed when suites are installed during maintenance, refurbishment, upgrades, or other operations during maintenance and service **1414.**

Thus, one or more illustrative embodiments may provide a more natural desired airflow of air in the passenger cabin. The different illustrative embodiments do not have the complexity of environmental systems that draw air from outside of the aircraft. Instead, the circulation system in the illustrative embodiments may provide a desired flow of air in the cabin through circulation units that may be associated with suites. These circulation units may be installed in existing and new suites. Further, with the use of circulation units, the need for louvers in the doors and gasper units may be reduced or eliminated.

## Claims

1. An air circulation system (205) for a passenger cabin (122, 124, 126, 208), the air circulation system (205) comprising:
- a suite (132, 212) forming a private sitting area within the passenger cabin (122, 124, 126, 208) and having walls (134, 218) extending upward from a floor (136, 220) of the passenger cabin (122, 124, 126, 208) without reaching a ceiling (138, 222) of the passenger cabin (122, 124, 126, 208); and
- a circulation unit (216, 606, 608),
**characterized in that** the circulation unit (216, 606, 608) comprises:
* an inlet system (226, 1000, 1100) configured to receive air (204) in the passenger cabin (208) in a location outside of the suite (132, 212);
* an outlet system (228, 1004, 1104) configured to output the air received by the inlet system (226, 1000, 1100) into an interior (232, 604) of the suite (132, 212); and
* a fan system (230, 1002, 1102) configured to cause a movement of the air (204) into the inlet system (226, 1000, 1100) from outside of the suite (132, 212) and out of the outlet system (228, 1004, 1104) into the interior (232, 604) of the suite (132, 212),
so that the air (204) moves upwards in the suite (132, 212) and over the walls (134, 218) which causes a desired level of circulation of the air (204) within the passenger cabin (122, 124, 126, 208).

2. The air circulation system (205) of claim 1, wherein the circulation unit (216, 606, 608) further comprises:
a filter system (236).

3. The air circulation system (205) of claim 1 or 2, wherein the inlet system (226, 1000, 1100) comprises:
an inlet grill (300, 612, 614);
a restrictor (302, 1006, 1106); and
a duct (304, 1008, 1108) configured to be connected to the fan system (230, 1002).

4. The air circulation system (205) of claim 1 or 2, wherein the outlet system (228, 1004, 1104) comprises:
a duct (304, 400, 1010, 1110) configured to be connected to the fan system (230, 1002, 1102);
a diffuser (402, 1012, 1112); and
an outlet (404, 906).

5. The air circulation system (205) of claim 3 or 4, wherein the inlet grill (300, 612, 614) is located on a wall in the walls (134) that is adjacent to an aisle (618).

6. The air circulation system (205) of claims 3, 4 or 5, wherein the inlet grill (300, 612, 614) is located on a lower half (616) of an exterior (610) of walls (134, 218) of the suite (132, 212).

7. The air circulation system (205) of any of claims 1 to 6, wherein the fan system (230, 1002, 1102) comprises a group of fans (500).

8. The air circulation system (205) of any of claims 1 to 7, wherein when the air moves upward in the suite (132, 212), the air in the suite (132, 212) mixes with the air outside of the suite (132, 212).

9. The air circulation system (205) of any of claims 1 to 8, wherein the movement of the air (204) is substantially imperceptible to a person in the suite (132, 212).

10. The air circulation system (205) of any of claims 1 to 9, wherein the passenger cabin (122, 124, 126, 208) is located in a platform (202) selected from one of the aircraft (100), a surface ship, a cruise ship, a spacecraft, and a train.

11. A method for circulating air in a passenger cabin (122, 124, 126, 208) comprising a suite (132, 212) having walls (134, 218) forming a private sitting area,
**characterized in that** the method comprises:
moving the air (204) in the passenger cabin (122, 124, 126,208), from an exterior (610) of the suite (132, 212) into an inlet system (226, 1000, 1100) connected to one of the walls (134, 218) thereof; and
moving the air (204) received by the inlet system (226, 1000, 1100) into an interior (232, 604) of the suite (132, 212) through an outlet system (228, 1004, 1104) connected to said one wall (134, 218),
so that the air (204) moved in the suite (132, 212) mixes with the air outside the suite in the passenger cabin (122, 124, 126, 208), which causes a desired level of circulation of the air in the passenger cabin (122, 124, 126, 208).

12. The method of claim 11 further comprising:
filtering the air (204) after the air (204) is moved into the inlet system (226, 1000) and before the air (204) is moved into the suite (132, 212) through the outlet system (228, 1004).

13. The method of claim 11 or 12, wherein the inlet system (226, 1000) is located on a wall of the suite (132, 212) that is adjacent to an aisle (618).

14. The method of claims 11, 12 or 13, wherein the passenger cabin (122, 124, 126, 208) is located in a platform (202) selected from one of an aircraft (100), a surface ship, a cruise ship, a spacecraft, and a train.

15. An aircraft (100) comprising the air circulation system (205) of any of claims 1 to 10.

## Patentansprüche

1. Luftumwälzsystem (205) für eine Passagierkabine (122, 124, 126, 208), wobei das Luftumwälzsystem (205) umfasst:
- eine Suite (132, 212), welche einen privaten Sitzbereich innerhalb der Passagierkabine (122, 124, 126, 208) ausbildet und Wände (134, 218) aufweist, welche sich nach oben von einem Boden (136, 220) der Passagierkabine (122, 124, 126, 208), ohne an eine Decke (138, 222) der Passagierkabine (122, 124, 126, 208) zu reichen, erstreckt; und
- eine Umwälzeinheit (216, 606, 608),
**dadurch gekennzeichnet, dass** die Umwälzeinheit (216, 606, 608) umfasst:
* ein Einlasssystem (226, 1000, 1100), welches zum Empfangen von Luft (204) in der Passagierkabine (208) in einen Ort außerhalb der Suite (132, 212) eingerichtet ist;
* ein Auslasssystem (228, 1004, 1104), welches zum Ausgeben der durch das Einlasssystem (226, 1000, 1100) empfangenen Luft in einen Innenbereich (232, 604) der Suite (132, 212) eingerichtet ist; und
* ein Gebläsesystem (230, 1002, 1102), welches zum Veranlassen einer Bewegung der Luft (204) in das Einlasssystem (226, 1000, 1100) von außerhalb der Suite (132, 212) und aus dem Auslasssystem (228, 1004, 1104) in den Innenbereich (232, 604) der Suite (132, 212) eingerichtet ist,
sodass die Luft (204) sich in der Suite (132, 212) nach oben und über die Wände (134, 218) bewegt, wodurch ein gewünschtes Umwälzausmaß der Luft (204) innerhalb der Passagierkabine (122, 124, 126, 208) veranlasst wird.

2. Luftumwälzsystem (205) nach Anspruch 1, wobei die Umwälzeinheit (216, 606, 608) ferner umfasst:
ein Filtersystem (236).

3. Luftumwälzsystem (205) nach Anspruch 1 oder 2, wobei das Einlasssystem (226, 1000, 1100) umfasst:
ein Einlassgitter (300, 612, 614);
eine Drosselblende (302, 1006, 1106); und
eine Leitung (304, 1008, 1108), welche dazu eingerichtet ist, mit dem Gebläsesystem (230, 1002) verbunden zu sein.

4. Luftumwälzsystem (205) nach Anspruch 1 oder 2, wobei das Auslasssystem (228, 1004, 1104) umfasst:
eine Leitung (304, 400, 1010, 1110), welche dazu eingerichtet ist, mit dem Gebläsesystem (230, 1002, 1102) verbunden zu sein;
einen Diffuser (402, 1012, 1112); und
einen Auslass (404, 906).

5. Luftumwälzsystem (205) nach Anspruch 3 oder 4, wobei das Einlassgitter (300, 612, 614) an einer Wand in den Wänden (134), angeordnet ist, welche zu einem Gang (618) benachbart ist.

6. Luftumwälzsystem (205) nach Anspruch 3, 4 oder 5, wobei das Einlassgitter (300, 612, 614) an einer unteren Hälfte (616) einer Außenseite (610) von Wänden (134, 218) der Suite (132, 212) angeordnet ist.

7. Luftumwälzsystem (205) nach einem der Ansprüche 1 bis 6, wobei das Gebläsesystem (230, 1002, 1102) eine Gruppe von Gebläsen (500) umfasst.

8. Luftumwälzsystem (205) nach einem der Ansprüche 1 bis 7, wobei sich die Luft in der Suite (132, 212) mit der Luft außerhalb der Suite (132, 212) vermischt, wenn sich die Luft in der Suite (132, 212) nach oben bewegt.

9. Luftumwälzsystem (205) nach einem der Ansprüche 1 bis 8, wobei die Bewegung der Luft (204) im Wesentlichen für eine Person in der Suite (132, 212) nicht wahrnehmbar ist.

10. Luftumwälzsystem (205) nach einem der Ansprüche 1 bis 9, wobei die Passagierkabine (122, 124, 126, 208) in einer Plattform (202) angeordnet ist, welche ausgewählt ist aus dem Flugzeug (100), einem Überwasserschiff, einem Kreuzfahrtschiff, einem Raumfahrzeug und einem Zug.

11. Verfahren zum Umwälzen von Luft in einer Passagierkabine (122, 124, 126, 208), welche eine Suite (132, 212) mit Wänden (134, 218), welche einen privaten Sitzbereich ausbilden, umfasst,
**dadurch gekennzeichnet, dass** das Verfahren umfasst:
Bewegen der Luft (204) in der Passagierkabine (122, 124, 126, 208) von einer Außenseite (610) der Suite (132, 212) in ein Einlasssystem (226, 1000, 1100), welches mit einer der Wände (134, 218) davon verbunden ist; und
Bewegen der durch das Einlasssystem (226, 1000, 1100) empfangenen Luft (204) in einen Innenbereich (232, 604) der Suite (132, 212) durch ein Auslasssystem (228, 1004, 1104), welches mit der einen Wand (134, 218) verbunden ist,
sodass die in der Suite (132, 212) bewegte Luft (204) sich mit der Luft außerhalb der Suite in der Passagierkabine (122, 124, 126, 208) vermischt, wodurch ein gewünschtes Umwälzausmaß der Luft in der Passagierkabine (122, 124, 126, 208) veranlasst wird.

12. Verfahren nach Anspruch 11, welches ferner umfasst:
Filtrieren der Luft (204) nachdem die Luft (204) in das Einlasssystem (226, 1000) bewegt wurde und bevor die Luft (204) in die Suite (132, 212) durch das Auslasssystem (228, 1004) bewegt wird.

13. Verfahren nach Anspruch 11 oder 12, wobei das Einlasssystem (226, 1000) an einer einem Gang (618) benachbarten Wand der Suite (132, 212) angeordnet ist.

14. Verfahren nach Anspruch 11, 12 oder 13, wobei die Passagierkabine (122, 124, 126, 208) in einer Plattform (202) angeordnet ist, welche ausgewählt ist aus einem Flugzeug (100), einem Überwasserschiff, einem Kreuzfahrtschiff, einem Raumfahrzeug und einem Zug.

15. Flugzeug (100), welches das Luftumwälzsystem (205) nach einem der Ansprüche 1 bis 10 umfasst.

## Revendications

1. Système de circulation d'air (205) pour une cabine passagers (122, 124, 126, 208), le système de circulation d'air (205) comprenant :
- une suite (132, 212) formant un espace salon privé à l'intérieur de la cabine passagers (122, 124, 126, 208) et comportant des parois (134, 218) s'étendant vers le haut depuis un sol (136, 220) de la cabine passagers (122, 124, 126, 208) sans atteindre un plafond (138, 222) de la cabine passagers (122, 124, 126, 208) ; et
- une unité de circulation (216, 606, 608),
**caractérisé en ce que** l'unité de circulation (216, 606, 608) comprend :
^{*} un système d'admission (226, 1000, 1100) configuré pour recevoir de l'air (204) dans la cabine passagers (208) dans un emplacement hors de la suite (132, 212) ;
^{*} un système de sortie (228, 1004, 1104) configuré pour évacuer l'air reçu par le système d'admission (226, 1000, 1100) vers un intérieur (232, 604) de la suite (132, 212) ; et
* un système de ventilateur (230, 1002, 1102) configuré pour provoquer un déplacement de l'air (204) dans le système d'admission (226, 1000, 1100) depuis hors de la suite (132, 212) et hors du système de sortie (228, 1004, 1104) vers l'intérieur (232, 604) de la suite (132, 212),
de sorte que l'air (204) se déplace vers le haut dans la suite (132, 212) et par-dessus les parois ( 134, 218), ce qui provoque un niveau désiré de circulation d'air (204) à l'intérieur de la cabine passagers (122, 124, 126, 208).

2. Système de circulation d'air (205) selon la revendication 1, dans lequel l'unité de circulation (216, 606, 608) comprend en outre :
un système de filtre (236).

3. Système de circulation d'air (205) selon la revendication 1 ou 2, dans lequel le système d'admission (226, 1000, 1100) comprend :
une grille d'admission (300, 612, 614) ;
un restricteur (302, 1006, 1106) ; et
une gaine (304, 1008, 1108) configurée pour être reliée au système de ventilateur (230, 1002).

4. Système de circulation d'air (205) selon la revendication 1 ou 2, dans lequel le système de sortie (228, 1004, 1104) comprend :
une gaine (304, 400, 1010, 1110) configurée pour être reliée au système de ventilateur (230, 1002, 1102);
un diffuseur (402, 1012, 1112) ; et
une sortie (404, 906).

5. Système de circulation d'air (205) selon la revendication 3 ou 4, dans lequel la grille d'admission (300, 612, 614) est située sur une paroi dans les parois (134) qui est adjacente à une allée (618).

6. Système de circulation d'air (205) selon les revendications 3, 4 ou 5, dans lequel la grille d'admission (300, 612, 614) est située sur une partie inférieure (616) d'un extérieur (610) de parois (134, 218) de la suite (132, 212).

7. Système de circulation d'air (205) selon l'une quelconque des revendications 1 à 6, dans lequel le système de circulation d'air (230, 1002, 1102) comprend un groupe de ventilateurs (500).

8. Système de circulation d'air (205) selon l'une quelconque des revendications 1 à 7, dans lequel lorsque l'air se déplace vers le haut dans la suite (132, 212), l'air dans la suite (132, 212) se mélange à l'air hors de la suite (132, 212).

9. Système de circulation d'air (205) selon l'une quelconque des revendications 1 à 8, dans lequel le déplacement de l'air (204) est sensiblement imperceptible pour une personne dans la suite (132, 212).

10. Système de circulation d'air (205) selon l'une quelconque des revendications 1 à 9, dans lequel la cabine passagers (122, 124, 126, 208) est située dans une plateforme (202) sélectionnée à partir de l'un parmi un aéronef (100), un navire de surface, un navire de croisière, un astronef et un train.

11. Procédé pour la circulation d'air dans une cabine passagers (122, 124, 126, 208) comprenant une suite (132, 212) comportant des parois (134,218) formant un espace salon privé,
**caractérisé en ce que** le procédé comprend :
le déplacement de l'air (204) dans la cabine passagers (122, 124, 126, 208), d'un extérieur (610) de la suite (132, 212) vers un système d'admission (226, 1000, 1100) relié à une des parois (134, 218) de celle-ci ; et
le déplacement de l'air (204) reçu par le système d'admission (226, 1000, 1100) vers un intérieur (232, 604) de la suite (132, 212) à travers un système de sortie (228, 1004, 1104) relié à ladite une paroi (134, 218),
de sorte que l'air (204) déplacé dans la suite ( 132, 212) se mélange à l'air extérieur à la suite dans la cabine passagers (122, 124, 126, 208), ce qui provoque un niveau désiré de circulation d'air dans la cabine passagers (122, 124, 126, 208).

12. Procédé selon la revendication 11 comprenant en outre :
le filtrage de l'air (204) après le déplacement de l'air (204) vers le système d'admission (226, 1000) et avant le déplacement de l'air (204) vers la suite (132, 212) à travers le système de sortie (228, 1004).

13. Procédé selon la revendication 11 ou 12, dans lequel le système de sortie (226, 1000) est situé sur une paroi de la suite (132, 212) qui est adjacente à une allée (618).

14. Procédé selon les revendications 11, 12 ou 13, dans lequel la cabine passagers (122, 124, 126, 208) est située dans une plateforme (202) sélectionnée à partir de l'un parmi un aéronef (100), un navire de surface, un navire de croisière, un astronef et un train.

15. Aéronef (100) comprenant le système de circulation d'air (205) selon l'une quelconque des revendications 1 à 10.
